# EUROPEAN PATENT APPLICATION

(11) **EP 3 246 887 A1**
(43) Date of publication of application: **22.11.2017**
(21) Application number: 15877613.8
(22) Date of filing: 01.09.2015
(51) Int. Cl.: G08B 21/04

(54) **INTELLIGENT WAISTBAND AND INTELLIGENT FALLING EMERGENCY EARLY WARNING SYSTEM**

(30) Priority: 13.01.2015 CN 201510016658
(71) Applicant: Guangdong Appscomm Co., Ltd., Guangzhou, Guangdong 510663 (CN)
(72) Inventor: LE, Liuping, Guangzhou Guangdong 510663 (CN)
(74) Representative: Klocke, Peter
(86) International application number: PCT/CN2015/088753
(87) International publication number: WO 2016/112700

(57) **Abstract**

The invention discloses an intelligent waistband and an intelligent falling-over emergency pre-warning system, wherein a flexible battery module for power supply is mounted in the band body, the control module is electrically connected with an acceleration sensor, an angle sensor and a pressure sensor for identifying falling-over conditions, and the control module is further electrically connected with a wireless module. The intelligent falling-over emergency pre-warning system is convenient to carry, is integrated and mounted in the waistband, has no any auxiliary feeling, conforms to the people's wearing habit, whether the human body is fallen down is judged in combination with the integration of information detected by the mobile communication device, the flexible battery, the WIFI communication module indoor positioning and GPS outdoor positioning module, the acceleration sensor and the angle sensor, the accuracy of judgment is high; the emergency risk avoidance can be performed to protect the user at the moment of falling-over to reduce the injury rate; and after falling-over down, the timely rescue and the subsequence wireless prediction can be provided, avoiding more serious consequence caused by falling.

## Description

### TECHNICAL FIELD

The invention relates to the field of intelligent wearing device, and more particular to an intelligent waistband with an intelligent falling-over emergency pre-warning system.

### BACKGROUND

As the communication technology, battery technology, position orientation and micro-sensor technology keep developing and the information society keeps improving, the development of a convenient, reliable SOS alarm, falling-over alarm and position orientation device becomes possible. It is hoped that there is a device capable of automatically giving an alarm when people falls down and takes other accident injuries, so as to treat and cure the injured in a timely way. Nowadays, the aging problem is on the rise, so it is extremely necessary to design a human body falling-over detection and alarm positioning device that is convenient to wear and has no any auxiliary feeling for the elderly population aged more than 65 years or the intellectual disabilities who are inconvenient to walk, and mountaineers, etc.

At present, the device with the mobile communication function mainly refers to various hand-held or wrist type devices, no waist type mobile communication device is provided on the market; variously hard batteries are mainly used for providing supply for the mobile communication device, so as not to bend at will; and the position orientation technology mainly refers to GPS positioning, and there is no GPS signal indoor generally. The common technology for falling-over detection is as follows: ①Aiming at the analysis of an audio signal, a falling-over event is judged by analyzing the frequency of vibration caused by impact, it is complicated to mount and is easy to wrongly judge and the commonality is poor. ② Aiming at the image analysis of video, the motion state of the object is monitored via a camera in a real time, and it is easy to expose out the privacy of a user. ③ based on a wearable detection device, the existing wearable falling-over monitoring is learned by analyzing the acceleration or acquiring the state of some device (such as a rotary apparatus), the requirement for the falling-over condition is high, the identification condition is single, the power consumption is large, and it is easy to wrongly judge.

### SUMMARY

With regard to the above problems, the invention aims at providing an intelligent waistband and an intelligent falling-over emergency pre-warning system that are rational in structure, convenient to use, accurately positions, has low misjudgment rate and can achieve the auxiliary help after emergency risk avoidance real-time wireless alarm. In order to achieve the object of the technology, the scheme of the invention is as follows: an intelligent waistband includes a band body and a control module, wherein a flexible battery module for power supply is mounted in the band body, the control module is electrically connected with an acceleration sensor, an angle sensor and a pressure sensor for identifying falling-over conditions, and the control module is further electrically connected with a wireless module.

Preferably, the control module is further electrically connected with a rescue module and a risk avoiding module.

Preferably, the risk avoiding module includes a wireless air bag and/or a wireless cane.

Preferably, the rescue module includes an alarm apparatus, an indicator light and an emergency medicine box.

Preferably, the wireless air bag comprises a head air bag and/or a back air bag.

Preferably, the wireless module comprises a GPS module, a Bluetooth chip, a WIFI chip and a communication chip with a SIM card.

An intelligent falling-over emergency pre-alarming system includes a control module, an acceleration sensor, an angle sensor, a pressure sensor, a wireless module, a rescue module and a risk avoiding module; wherein the falling-over state judging and linkage flow is as follows:
Falling-over preventing stage: the control module monitors the body movement condition of a user via the acceleration sensor and an angle sensor; when the acceleration data gathered by the acceleration sensor exceeds the threshold value, the angle sensor state is confirmed, when the angle data exceeds the threshold value, the risk avoiding module is triggered, and the risk avoiding module will start immediately, so as to maximally avoid falling-over down or slowing down the impact;
Injury pre-judging stage: the control module confirms the very serious situation of falling-over and whether the posture is normal according to the threshold value information and the subsequent information detected by the pressure sensor after falling-over down, if the data shows the falling-over is very serious and the user does not stop initiatively, the wireless module will start immediately to confirm the position of the user and transmit alarm information to the relative;
Auxiliary help stage: after confirming the user falls down seriously and not initially stopping pre-judging, the control module will start the rescue module to issue an aid voice and rescue guide information to neighbors, which is convenient for the neighbors to carry out emergency aid. Preferably, the risk avoiding module comprises a wireless air bag and/or a wireless cane. If the user inclines backward and falls down, the wireless air bag will start to protect the head and the back of the user to relieve the impact force. If the user inclines forward, the wireless hand will start to unfold an auxiliary support, so that the cane will better stand to provide more stable support for the user.

Preferably, the wireless module comprises a GPS module, a Bluetooth chip, a WIFI chip and a communication chip with a SIM card. When confirming the rapidly falling, the Bluetooth chip can start the matched risk avoiding module to rapidly avoid risk; after confirming the user falls down seriously, the pre-warning information will be sent to the relative via the communication chip in a timely way; under an open environment, the GPS module can correctly provide the position of the user; if the wireless WIFI network is searched nearby, the WIFI chip will automatically connect, which can improve the indoor positioning effect and sent the real-time data.

Preferably, the rescue module includes an alarm apparatus, an indicator light and an emergency medicine box; after confirming the user falls down serious, the alarm apparatus gives an alarm sound, if the user does not stop initiatively, the alarm apparatus will issue an aid voice and rescue guide information to neighbors, the indicator light will turn on at the same time to see even in a poor light and to obviously indicate the position of the emergency medicine box.

The invention has the beneficial effects that intelligent falling-over emergency pre-warning system is convenient to carry, is integrated and mounted in the waistband, has no any burdensome feeling, conforms to the people's wearing habit, whether the human body is fallen down is judged in combination with the integration of information detected by the mobile communication device, the flexible battery, the WIFI communication module indoor positioning and GPS outdoor positioning module, the acceleration sensor and the angle sensor, the accuracy of judgment is high; the emergency risk avoidance can be performed to protect the user at the moment of falling-over to reduce the falling-over occurrence probability and the injury rate after falling; and after falling-over down, the timely rescue and the subsequence wireless prediction can be provided, the convenience in rescue by the neighbors can be improved, and the relative can rapidly be aware of the specific condition of the user, avoiding more serious consequence caused by falling.

### BRIEF DESCRIPTION OF THE DRAWINGS

Fig. 1 is a structure diagram of the invention;
Fig. 2 is a processing flow diagram of the invention;
Fig. 3 is a schematic structural diagram of the front of the invention; and
Fig. 4 is a schematic diagram of the internal structure of the invention.

### DETAILED DESCRIPTION

The invention will be further described in details hereinafter with reference to the drawings and the specific embodiments.

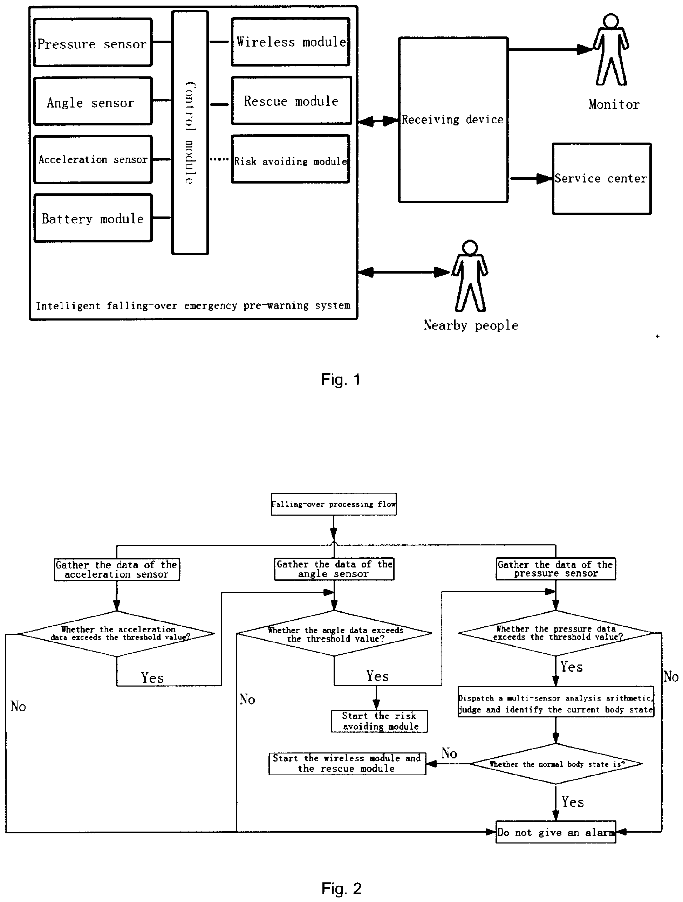

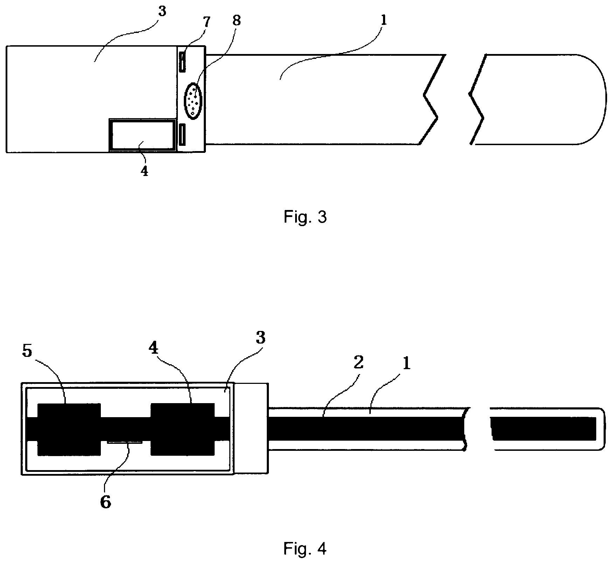

As shown in Fig. 1, Fig. 3 and Fig. 4, the specific embodiment of the invention is an intelligent waistband, including a band body 1, a shell 3 and a control module 6. A flexible battery module 2 for power supply is mounted in the band body 1, the control module 6 is electrically connected with an acceleration sensor, an angle sensor and a pressure sensor for identifying falling-over conditions, and the control module 6 is further electrically connected with a wireless module 5.

The control module is connected with the angle sensor and the acceleration sensor. The angle sensor detects the data of an inclined angle between the human body and the ground according to the change in the angle between the shoe pad and the ground. The acceleration sensor detects the data of the acceleration generated by human body's movement. The control module judges whether the human body falls down via an information integration technology of a plurality of sensors. When the human body falls down, the wireless module is automatically triggered, and the signal is transmitted via the mobile communication to the service center or the monitor terminal to contact rescue.

In order to improve the risk avoiding and rescue ability of the intelligent waistband, the control module 6 is further electrically connected with a rescue module and a risk avoiding module. The falling-over probability or the risk of injury after falling-over can be reduced via the risk avoiding module in case of an emergency, and the help information can be issued to the neighbors via the rescue module in a timely manner.

When the acceleration sensor detects an acceleration threshold value signal that the device wearer exceeds the normal activities, the acceleration sensor outputs an interrupt signal and awakens the control module that is directly electrified by a power supply and is in a low power consumption suspend mode under general conditions; when the control module is awakened by the acceleration sensor signal, and the angle sensor is started by the single chip microcomputer to gather the angle change data. As the burst time is less than 2 seconds when the human body falls down instantly, the wearer is judged to fall down when the control module calculates the change in the movement acceleration exceeding the threshold value scope and the change in the posture exceeding the threshold value angle of the device wearer within 2 seconds according to the gathered three-dimensional acceleration change information. The change in acceleration value is high and the change in the angle value is also high, the risk avoiding module will be triggered to perform urgent danger prevention for the user to reduce the injuries after falling.

The multi-sensor integration technology monitors various postures of the human body in a real time through the acceleration sensor and the angle sensor, whether the current acceleration value is more than the acceleration threshold value when falling-over down by analyzing the gathered acceleration data, if it is not more than the threshold value, it does not trigger; otherwise, the falling-over posture of the current human body is continuously detected by analyzing the data of the two angle sensors, whether the current angle is more than the angle threshold value when falling-over down is judged by analyzing the gathered angle data, if it is not more than the threshold value, it does not trigger; otherwise, the human body falls down and triggers, the pressure sensor detects the pressure at the same time, and if the pressure is more than the threshold value, it is confirmed to seriously fall down. At this time, if the user does not manually close the alarm, the wireless module is automatically started to send position information and falling-over condition to the relative, and the rescue module is started at the same time to call for help from the neighbors.

As the elder falls down easily and easily happens the risks of fracture or cerebral concussion after falling-over downs, the risk avoiding module includes a wireless air bag or a wireless cane. The wireless air bag includes a head air bag or a back air bag. If tilting forward in emergency situations, the wireless cane can unfold the auxiliary support, add the supporting surface, improve the stability, stabilize the user and reduce the falling-over probability; and if tilting backward in emergency situations, the wireless air bag can be inflated to protect the key parts of the user, such as head and waist, to reduce the rate of fracture or cerebral concussion.

In order to be convenient to call for help from the other people, the rescue module includes an alarm apparatus, an indicator light 7 and an emergency medicine box 4. The alarm apparatus 8 can attach the attention of the neighbors and guide the neighbors how to rescue, the indicator light 7 can provide instructions in a dark environment; as part of diseases attack, an emergency medicine needs to be taken in a timely way, and the emergency medicine box 4 can provide the storage space of the emergency medicine.

In order to determine the user's position and the actual situation in all directions, the wireless module includes a GPS module, a Bluetooth chip, a WIFI chip and a communication chip with a SIM card. The Bluetooth chip can start the matched avoiding module to rapidly avoid risk; the communication chip can send the pre-warning information to the relative in a timely way; under an open environment, the GPS module can correctly provide the position of the user; the WIFI chip will automatically connect the wireless WIFI network, which can improve the indoor positioning effect and send the real-time data.

As shown in Fig. 1 and Fig. 2, an intelligent falling-over emergency pre-alarming system includes a control module, an acceleration sensor, an angle sensor, a pressure sensor, a wireless module, a rescue module and a risk avoiding module; wherein the falling-over state judging and linkage flow is as follows:
Falling-over preventing stage: the control module monitors the body movement condition of a user via the acceleration sensor and an angle sensor; when the acceleration data gathered by the acceleration sensor exceeds the threshold value, the angle sensor state is confirmed, when the angle data exceeds the threshold value, the risk avoiding module is triggered, and the risk avoiding module will start immediately, so as to maximally avoid falling-over down or slowing down the impact;
Injury pre-judging stage: the control module confirms the very serious situation of falling-over and whether the posture is normal according to the threshold value information and the subsequent information detected by the pressure sensor after falling-over down, if the data shows the falling-over is very serious and the user does not stop initiatively, the wireless module will start immediately to confirm the position of the user and transmit alarm information to the relative;
auxiliary help stage: after confirming the user falls down seriously and not initially stopping pre-judging, the control module will start the rescue module to issue an aid voice and rescue guide information to neighbors, which is convenient for the neighbors to carry out emergency aid.

The risk avoiding module comprises a wireless air bag and a wireless cane; if the user inclines backward and falls down, the wireless air bag will start to protect the head and the back of the user to relieve the impact force; and if the user inclines forward, the wireless hand will start to unfold an auxiliary support, so that the cane will better stand to provide more stable support for the user.

The wireless module includes a GPS module, a Bluetooth chip, a WIFI chip and a communication chip with a SIM card; when confirming the rapidly falling, the Bluetooth chip can start the matched risk avoiding module to rapidly avoid risk; after confirming the user falls down seriously, the pre-warning information will be sent to the relative via the communication chip in a timely way; under an open environment, the GPS module can correctly provide the position of the user; if the wireless WIFI network is searched nearby, the WIFI chip will automatically connect, which can improve the indoor positioning effect and send the real-time data.

The rescue module includes an alarm apparatus, an indicator light and an emergency medicine box; after confirming the user falls down serious, the alarm apparatus gives an alarm sound, if the user does not stop initiatively, the alarm apparatus will issue an aid voice and rescue guide information to neighbors, the indicator light will turn on at the same time to see even in a poor light and to obviously indicate the position of the emergency medicine box.

The descriptions above are the preferred embodiments of the invention merely, but not intended to limit the invention. Any tiny modification, equivalent replacement and improvement made on the above embodiments according to the technical essence of the invention shall all fall within the protection scope of the technical solutions of the invention.

## Claims

1. An intelligent waistband, comprising a band body and a control module, wherein a flexible battery module for power supply is mounted in the band body, the control module is electrically connected with an acceleration sensor, an angle sensor and a pressure sensor for identifying falling-over conditions, and the control module is further electrically connected with a wireless module.

2. The intelligent waistband according to claim 1, wherein the control module is further electrically connected with a rescue module and a risk avoiding module.

3. The intelligent waistband according to claim 2, wherein the risk avoiding module comprises a wireless air bag and/or a wireless cane.

4. The intelligent waistband according to claim 2, wherein the rescue module comprises an alarm apparatus, an indicator light and an emergency medicine box.

5. The intelligent waistband according to claim 3, wherein the wireless air bag comprises a head air bag and/or a back air bag.

6. The intelligent waistband according to any one of claims 1 to 5, wherein the wireless module comprises a GPS module, a Bluetooth chip, a WIFI chip and a communication chip with a SIM card.

7. An intelligent falling-over emergency pre-alarming system, comprising a control module, an acceleration sensor, an angle sensor, a pressure sensor, a wireless module, a rescue module and a risk avoiding module; wherein the falling-over state judging and linkage flow is as follows:
falling-over preventing stage: the control module monitors the body movement condition of a user via the acceleration sensor and an angle sensor; when the acceleration data gathered by the acceleration sensor exceeds the threshold value, the angle sensor state is confirmed, when the angle data exceeds the threshold value, the risk avoiding module is triggered, and the risk avoiding module will start immediately, so as to maximally avoid falling-over down or slowing down the impact;
injury pre-judging stage: the control module confirms the very serious situation of falling-over and whether the posture is normal according to the threshold value information and the subsequent information detected by the pressure sensor after falling-over down, if the data shows the falling-over is very serious and the user does not stop initiatively, the wireless module will start immediately to confirm the position of the user and transmit alarm information to the relative; and
auxiliary help stage: after confirming the user falls down seriously and not initially stopping pre-judging, the control module will start the rescue module to issue an aid voice and rescue guide information to neighbors, which is convenient for the neighbors to carry out emergency aid.

8. The intelligent falling-over emergency pre-alarming system according to claim 7, wherein the risk avoiding module comprises a wireless air bag and a wireless cane; if the user inclines backward and falls down, the wireless air bag will start to protect the head and the back of the user to relieve the impact force; and if the user inclines forward, the wireless hand will start to unfold an auxiliary support, so that the cane will better stand to provide more stable support for the user.

9. The intelligent falling-over emergency pre-alarming system according to claim 7, wherein the wireless module comprises a GPS module, a Bluetooth chip, a WIFI chip and a communication chip with a SIM card; when confirming the rapidly falling, the Bluetooth chip can start the matched risk avoiding module to rapidly avoid risk; after confirming the user falls down seriously, the pre-warning information will be sent to the relative via the communication chip in a timely way; under an open environment, the GPS module can correctly provide the position of the user; if the wireless WIFI network is searched nearby, the WIFI chip will automatically connect, which can improve the indoor positioning effect and sent the real-time data.

10. The intelligent falling-over emergency pre-alarming system according to claim 7, wherein the rescue module comprises an alarm apparatus, an indicator light and an emergency medicine box; after confirming the user falls down serious, the alarm apparatus gives an alarm sound, if the user does not stop initiatively, the alarm apparatus will issue an aid voice and rescue guide information to neighbors, the indicator light will turn on at the same time to see even in a poor light and to obviously indicate the position of the emergency medicine box.
